# FASCICULE DE BREVET EUROPEEN

(11) **EP 3 985 286 B1**
(45) Date de publication et mention de la délivrance du brevet: **20.08.2025**
(21) Numéro de dépôt: 21203181.9
(22) Date de dépôt: 18.10.2021
(51) Int. Cl.: F16J 15/00, F16J 15/08, F16L 15/00, F16L 15/04, F16L 19/02

(54) **RACCORD VISSÉ POUR MOTEUR-FUSÉE**
VERSCHRAUBTER ANSCHLUSS FÜR RAKETENTRIEBWERK
SCREW CONNECTOR FOR A ROCKET ENGINE

(30) Priorité: 16.10.2020 FR 2010655
(43) Date de publication de la demande: 20.04.2022
(73) Titulaire: ArianeGroup SAS, 78130 Les Mureaux (FR)
(72) Inventeur: PYRE, Alain, 27207 VERNON Cedex (FR); CHOPINET, Jean-Noël, 27207 VERNON Cedex (FR)
(74) Mandataire: Cabinet Beau de Loménie

(56) Documents cités:
- DE-B- 1 015 650
- US-A- 2 904 355
- US-A- 3 971 566
- US-A- 5 279 112
- US-A- 841 059

## Description

### Domaine Technique

Le présent exposé concerne un raccord vissé pour moteur-fusée configuré pour assembler une conduite de fluide à un autre élément du moteur-fusée.

### Technique antérieure

L'utilisation de raccords vissés dans un moteur-fusée est courante. Ces raccords vissés doivent respecter un cahier des charges exigeant et doivent en particulier :
a. Assurer une étanchéité à des températures allant des températures cryogéniques à des températures supérieures à la température ambiante.
b. Résister à des conditions vibratoires importantes.
c. Conserver leur étanchéité lorsque la conduite et/ou le raccord vissé se déforme.

Par ailleurs, le raccord vissé doit conserver ses performances durant les régimes transitoires du moteur-fusée, régimes dans lesquels les conditions de température et de vibrations évoluent.

Certains raccords vissés connus permettent de répondre au moins partiellement à ce cahier des charges, parmi eux le raccord vissé communément désigné sous l'acronyme « RLSEP » et le raccord vissé avec joints communément désingé sous l'acronyme « VSEP ». Ces deux types de raccords sont particulièrement onéreux.

D'autre part, d'autres raccords vissés comprenant des joints plats sont connus, mais ne permettent pas de satisfaire le cahier des charges exposé précédemment. En particulier, les joints plats ont l'inconvénient de fluer à température ambiante. Leur utilisation nécessite une maintenance préalable à chaque utilisation du moteur les contenant, ce qui est rédhibitoire.

Il existe donc un besoin de réduction de coût et d'amélioration des dispositifs connus. DE 1015650 B divulgue un bouchon avec une collerette déformable. US 3971566 divulgue un joint hydraulique.

### Exposé de l'invention

Le présent exposé concerne un raccord vissé d'une conduite de fluide à un support, comprenant un joint solidarisé au support, une partie de jointure configurée pour coopérer avec le joint par serrage, et un bras s'étendant autour de la conduite à l'extérieur de la conduite, reliant la conduite à la partie de jointure, dans lequel la partie de jointure présente une raideur supérieure à celle du bras et du joint.

Dans le présent exposé, il est entedu que le terme « raideur » rapporte à une raideur structurelle. Dans le présent exposé, il est entendu que la raideur du bras en flexion est plus faible que la raideur de la partie de jointure en compression. On comprend alors que lorsqu'une contrainte est appliquée au raccord vissé, le bras est déformé avant la partie de jointure.

Ainsi, un tel raccord vissé présente un bras qui est capable de fléchir pour réduire les contraintes imposées par les dilatations et les compressions subies par le raccord sous l'effet de la température. Par conséquent, ce raccord vissé est utilisable sur une large plage de températures. En particulier, un tel raccord vissé est utilisable sur une gamme de température plus large que les raccords vissés connus.

Par ailleurs, cette configuration est à même de supporter les contraintes vibratoires qui peuvent être subies dans un moteur-fusée. De manière générale, ce raccord vissé est compatible avec les régimes transitoires du fonctionnement du moteur-fusée et est apte à supporter des variations de température rapides.

Aussi, le raccord vissé décrit ci-dessus est simple à fabriquer, et en particulier plus simple à fabriquer que les raccords RLSEP et VSEP connus. Il en est par conséquent moins coûteux. De manière général le raccord vissé du présent exposé est peu coûteux.

La conduite peut s'étendre le long d'un axe, et le bras peut comprendre une épaisseur axiale, selon la direction de l'axe, plus faible que l'épaisseur axiale de la partie de jointure. Selon un exemple, l'épaisseur axiale du bras est au moins deux fois plus faible que l'épaisseur axiale de la partie de jointure. Selon un exemple, l'épaisseur axiale du bras est au moins trois fois plus faible que l'épaisseur axiale de la partie de jointure. Selon un exemple, l'épaisseur axiale du bras est au moins trois ou quatre fois plus faible que l'épaisseur axiale de la partie de jointure.

Dans certaines configurations, la raideur axiale de l'ensemble constitué du bras, de la partie de jointure et du joint est plus faible que la raideur axiale d'une portion de la conduite d'une longueur axiale égale à la longueur axiale de l'ensemble constitué du bras, de la partie de jointure et du joint. Préférentiellement, la raideur axiale de l'ensemble constitué du bras, de la partie de jointure et du joint est au moins trois fois plus faible que la raideur axiale de la portion conduite de longueur correspondante.

Dans le présent exposé, le raccord vissé comprend une première partie filetée et le support comprend une deuxième partie filetée, la première partie filetée et la deuxième partie filetée étant configurée pour coopérer pour assembler le raccord au support par vissage.

Dans certaines configurations, une portion de la partie de jointure est configurée pour plastifier lorsque du fluide passe dans la conduite.

Dans cette configuration, l'étanchéité du raccord vissé est améliorée. La plastification s'opère lors du passage du fluide cryogénique, et aboutit à la création d'une zone plastifiée qui améliore l'étanchéité.

Dans le présent exposé, le joint présente une raideur supérieure à celle du bras. On comprend que la raideur en compression du joint est supérieure à la raideur en flexion du bras.

Dans cette configuration, le bras est le premier élément qui fléchit lorsqu'une contrainte s'applique sur le raccord vissé. Puisque le bras est la partie du raccord la plus flexible, le raccord est alors apte à reprendre plus facilement les contraintes qu'il subit.

Dans certains modes de réalisations, le support est une autre conduite.

Dans cette configuration, le raccord vissé peut être utilisé sur un plus grand nombre de situations, et ainsi être inclus dans un plus grand nombre de conduite, réduisant d'autant le coût de fabrication du moteur-fusée.

Dans certains modes de réalisations, le joint est en cuivre.

Le cuivre présente des propriétés permettant de garantir une rigidité de la partie de jointure compatible avec la rigidité du joint et du support pendant le régime permanent et les régimes transitoires.

Cette configuration est aussi avantageuse car le cuivre ne flue pas à température ambiante. Ainsi, un raccord vissé qui est monté puis stocké ne perd pas de serrage à cause d'un fluage du joint, puisque cet dernier ne flue pas. **En** particulier, le rapport entre la température de montage et de stockage et la température de fusion du cuivre est inférieur à 0,25, valeur à partir de laquelle des phénomènes de fluage peuvent apparaître. En l'occurrence, ce même rapport est de 0,31 pour les joints en aluminium, ce qui rend le fluage d'un joint en aluminium possible et nécessite un resserrage régulier.

Dans certains modes de réalisations, un volume d'étanchéité est prévu entre la conduite d'une part et le joint et la partie de jointure d'autre part, le volume d'étanchéité étant configuré pour recueillir le fluide s'échappant de la jonction entre la première partie filetée et la deuxième partie filetée, lesdites parties filetées n'ayant typiquement pas pour fonction d'assurer une liaison étanche.

Dans cette configuration, le volume d'étanchéité permet de contenir le fluide s'échappant du filetage perméable dans le volume d'étanchéité.

Dans certains modes de réalisations, le joint et la partie de jointure sont annulaires.

Dans certains modes de réalisations, la partie de jointure comprend une saillie d'étanchéité annulaire s'étendant depuis une face de la partie de jointure configurée pour entrer en contact avec le joint, et configurée pour pénétrer dans le joint lors du serrage de la partie de jointure sur le joint.

Cette configuration offre un élément supplémentaire pour assurer l'étanchéité du raccord. L'étanchéité est alors assurée par la saillie et par le serrage de la partie de jointure contre le joint.

L'exposé concerne par ailleurs un moteur-fusée comprenant l'un des raccords vissés décrits précédemment.

Ainsi, ledit moteur-fusée comprend les avantages cités précédemment, à savoir un coût moindre et une fiabilité accrue.

Dans certains modes de réalisation, le moteur-fusée comprenant ledit raccord vissé voit ce raccord disposé dans une conduite cryogénique.

L'exposé concerne par ailleurs un engin spatial comprenant un moteur-fusée comme décrit précédemment.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente un engin spatial comprenant un raccord vissé selon un mode de réalisation.
[Fig. 2] La figure 2 représente une vue en coupe d'un raccord vissé selon un premier mode de réalisation.

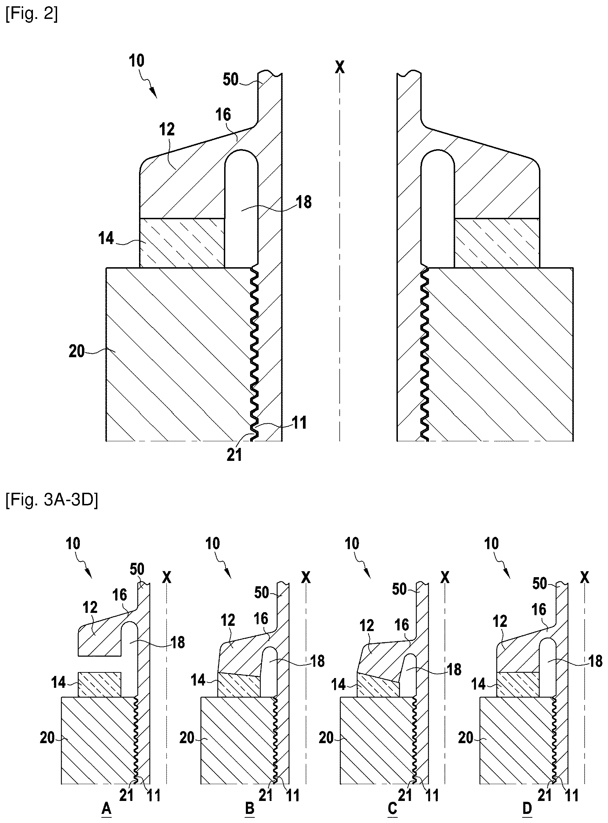

[Fig. 3A-3D] La figure 3A représente une vue partielle en coupe d'un raccord vissé non assemblé selon le premier mode de réalisation, la figure 3B représente vue partielle en coupe d'un raccord vissé assemblé selon le premier mode de réalisation d'une conduite dans lequel aucun fluide n'est passé, la figure 3C représente vue partielle en coupe d'un raccord vissé selon le premier mode de réalisation lorsque le moteur-fusée est en régime transitoire et lorsqu'un fluide froid traverse la conduite, la figure 3D représente vue partielle en coupe d'un raccord vissé selon le premier mode de réalisation lorsque le moteur-fusée est en régime transitoire et lorsqu'un fluide chaud traverse la conduite.
[Fig. 4A-4B] La figure 4A représente vue partielle en coupe d'un raccord non assemblé selon un deuxième mode de réalisation, la figure 4B représente vue partielle en coupe d'un raccord assemblé selon le deuxième mode de réalisation.

### Description des modes de réalisation

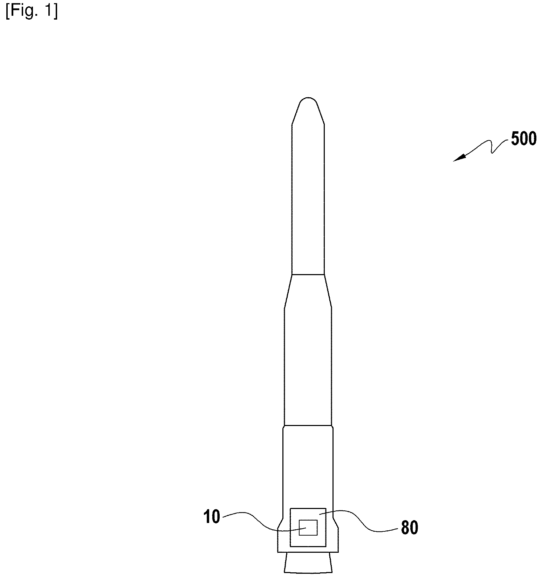

La figure 1 représente schématiquement un engin spatial 500 comprenant un moteur-fusée 80, lui-même comprenant un raccord vissé 10. Le raccord vissé 10 est disposé au sein d'une conduite 50 représentée partiellement sur les figures 2à 3.

La figure 2 représente un raccord vissé 10 selon un premier mode de réalisation. Ce raccord vissé (ou raccord) 10 comprend une première partie filetée 11, une partie de jointure 12, un joint 14 et un bras 16. Le raccord 10 est solidarisé à la conduite 50, et cette dernière s'étend selon un axe X. Le présent exposé prend l'exemple non limitatif d'une conduite 50 cryogénique, mais la conduite est apte à convoyer d'autres types de fluide. Dans le présent exemple, le bras 16 présente une épaisseur axiale, selon la direction de l'axe X, plus faible que l'épaisseur axiale de la partie de jointure 12. En particulier, l'épaisseur axiale du bras 16 est au moins trois fois plus faible que l'épaisseur axiale de la partie de jointure 12.

Le bras 16 est solidarisé à la conduite 50 tandis que le joint 14 est solidarisé à un support 20. Le bras 16 s'étend depuis la périphérie externe de la conduite 50, et présente une forme générale annulaire. Le bras 16 est configuré pour se déformer élastiquement dans les conditions prévues d'utilisation du raccord vissé 10.

Le support 20 comprend une deuxième partie filetée 21 et la première partie filetée 11 du raccord 10 est configurée pour coopérer avec la deuxième partie filetée 21 du support 20. Le support 20 peut par ailleurs être une autre conduite de fluide ou un élément du moteur-fusée. Dans l'exemple du premier mode de réalisation, le support 20 est une partie du moteur-fusée solidarisée à la conduite 50 à travers la coopération de la première partie filetée 11 et la deuxième partie filetée 21.

Un volume d'étanchéité 18 est ménagé entre la conduite 50 d'une part et le joint 14 et la partie de jointure 12 d'autre part. Dans l'exemple du premier mode de réalisation, le volume d'étanchéité 18 est recouvert par le bras 16 par le dessus et par le support 20 par le dessous.

Le bras 16 et la partie de jointure 12 du raccord 10 peuvent être fournis en une pièce avec la conduite 50.

Lors de l'assemblage du raccord 10 avec le support 20 par coopération de leur partie filetée 11, 21 respective, la partie de jointure 12 est serrée contre le joint 14, ce qui assure l'étanchéité.

Le joint 14 est typiquement un élément annulaire de rayon intérieur supérieur à 5 mm et inférieur à 15 mm, de préférence inférieure à 10mm et de rayon extérieur supérieur à 16mm et inférieur à 25 mm, de préférence supérieur à 20mm. Le joint 14 est par exemple en cuivre ou en un alliage à base de cuivre, c'est-à-dire un alliage dont la plus grande fraction massique est du cuivre.

La partie de jointure 12 est par exemple annulaire, en acier inoxydable et présente des dimensions compatibles avec son serrage sur le joint 14.

Dans le présent exemple, la raideur axiale de l'ensemble constitué du bras 16, de la partie de jointure 12 et du joint 14 est au moins trois fois plus faible que la raideur axiale d'une portion de la conduite 50 d'une longueur axiale égale à la longueur axiale de l'ensemble constitué du bras 16, de la partie de jointure 12 et du joint 14. Cette différence de raideur axiale est obtenue, au moins en partie, par la faible épaisseur axiale du bras 16 comparée à l'épaisseur axiale de partie de jointure 12.

Les figures 3A-D représentent le raccord 10 dans différents états.

La figure 3A représente un raccord 10 avant le vissage de la première partie filetée 11 dans la deuxième partie filetée 21. On constate que le bras 16 n'est pas fléchi.

La figure 3B représente un raccord 10 dans lequel la première partie filetée 11 est vissée dans la deuxième partie filetée 21, tel qu'on pourrait l'obtenir juste après le vissage ou après un stockage. Aucun fluide ne s'écoule dans la conduite 50. On constate que le bras 16 est légèrement fléchi, si bien que le joint 14 est d'avantage serré. Cette flexion du bras 16 est élastique. **En** particulier, le joint 14 est légèrement plastifié. Ainsi, un raccord 10 vissé puis stocké conserve son serrage.

La figure 3C représente un raccord 10 vissé d'une conduite 50 traversée par du fluide froid, alors que le raccord 10 est en régime thermique transitoire. On constate que le bras 16 fléchit de manière plus importante par rapport à sa flexion aux conditions de la figure 3B. Cette flexion du bras 16 reste élastique. Par conséquent, le joint 14 est d'avantage serré.

La figure 3D représente un raccord 10 vissé d'une conduite 50 traversé par un fluide chaud, alors que le raccord 10 est en régime thermique transitoire. Dans cette situation, la conduite 50 se dilate, ce qui abaisse la flexion du bras 16 : c'est-à-dire qu'il tend à retourner vers une position dans lequel il n'est pas contraint, par rapport à sa flexion aux conditions de la figure 3B, tout en restant fléchi. Cette déflexion du bras 16 reste élastique. Cependant, le raccord 10 conserve son étanchéité et la partie de jointure 12 reste serrée contre le joint 14. En effet, la déflexion du bras 16 est inférieure à sa flexion au repos, lorsqu'aucun fluide ne passe dans la conduite 50. Le bras 16 reste donc fléchi même lorsque la conduite est traversée par un fluide chaud. Ainsi, la partie de jointure 12 reste en contact avec le joint 14.

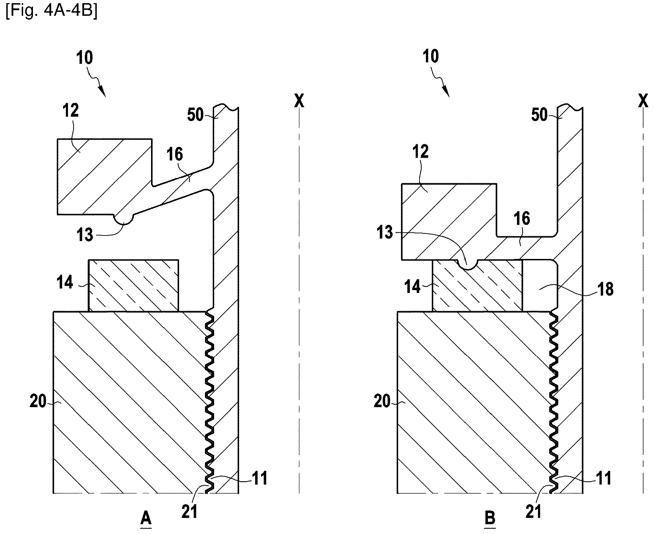

Les figures 4A et 4B représentent un raccord 10 selon un deuxième mode de réalisation, respectivement démonté et monté. Ce raccord 10 comprend une partie de jointure 12, un joint 14 et un bras 16. Le raccord 10 du deuxième mode de réalisation comprend une saillie 13 annulaire disposée sur la partie de jointure 12. Cette saillie 13 est disposée sur une face de la partie de jointure 12 configurée pour être en contact avec le joint 14 et le pénétrer selon la direction de vissage du raccord 10. Ainsi, la saillie 13 améliore l'étanchéité du raccord vissé 10.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description, les dimensions et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Raccord vissé (10) d'une conduite (50) de fluide à un support (20), le raccord vissé comprenant la conduite (50), un joint (14) destiné à être solidarisé au support (20), une partie de jointure (12) configurée pour coopérer avec le joint (14) par serrage, et un bras (16) s'étendant autour de la conduite (50) à l'extérieur de la conduite (50) et reliant la conduite (50) à la partie de jointure (12), dans lequel
la partie de jointure (12) présente une raideur supérieure à celle du bras (16) et du joint (14), c'est-à-dire que la raideur du bras (16) en flexion est plus faible que la raideur de la partie de jointure (12) en compression, et
le raccord vissé (10) comprend une première partie filetée (11) et le support (20) comprend une deuxième partie filetée (21), la première partie filetée (11) et la deuxième partie filetée (21) étant configurées pour coopérer pour assembler le raccord au support par vissage, **caractérisé en ce que** :
le joint (14) présente une raideur supérieure à celle du bras (16), c'est-à-dire que la raideur en compression du joint (14) est supérieure à la raideur en flexion du bras (16).

2. Raccord vissé (10) selon la revendication 1, dans lequel le support (20) est une autre conduite (50).

3. Raccord vissé (10) selon l'une des revendications 1 ou 2, dans lequel le joint (14) est en cuivre.

4. Raccord vissé (10) selon l'une des revendications 1 à 3, dans lequel un volume d'étanchéité (18) est prévu entre la conduite (50) d'une part et le joint (14) et la partie de jointure (12) d'autre part, le volume d'étanchéité (18) étant configuré pour recueillir du fluide ayant fui de la conduite (50).

5. Raccord vissé (10) selon l'une des revendications 1 à 4, dans lequel la partie de jointure (12) et le joint (14) sont annulaires.

6. Raccord vissé (10) selon l'une des revendications 1 à 5, dans lequel la partie de jointure (12) comprend une saillie d'étanchéité (13) annulaire s'étendant depuis une face de la partie jointure (12) configurée pour entrer en contact avec le joint (14), et configurée pour pénétrer dans le joint (14) lors du serrage de la partie de jointure (12) sur le joint (14).

7. Moteur-fusée (80) comprenant un raccord vissé (10) selon l'une quelconque des revendications 1 à 6.

8. Moteur-fusée (80) selon la revendication 7, dans lequel le raccord vissé (10) est disposé dans une ligne cryogénique.

9. Engin spatial (500) comprenant un moteur-fusée (80) selon la revendication 8.

## Patentansprüche

1. Verschraubter Anschluss (10) einer Fluidleitung (50) an einem Halter (20), wobei der verschraubte Anschluss die Leitung (50), eine Dichtung (14), die zur festen Verbindung mit dem Halter (20) bestimmt ist, ein Verbindungsstück (12), das ausgelegt ist, um durch Festziehen mit der Dichtung (14) zusammenzuwirken, und einen Arm (16) umfasst, der sich um die Leitung (50) außerhalb der Leitung (50) erstreckt und die Leitung (50) mit dem Verbindungsstück (12) verbindet, wobei
das Verbindungsstück (12) eine größere Steifigkeit als der Arm (16) und die Dichtung (14) aufweist, das heißt, dass die Biegesteifigkeit des Arms (16) kleiner ist als die Kompressionssteifigkeit des Verbindungsstücks (12), und
der verschraubte Anschluss (10) einen ersten Gewindeabschnitt (11) und der Halter (20) einen zweiten Gewindeabschnitt (21) umfasst, wobei der erste Gewindeabschnitt (11) und der zweite Gewindeabschnitt (21) ausgelegt sind, um zusammenzuwirken, um den Anschluss durch Verschrauben mit dem Halter zu verbinden, **dadurch gekennzeichnet, dass**:
die Dichtung (14) eine größere Steifigkeit als der Arm (16) aufweist, das heißt, dass die Kompressionssteifigkeit der Dichtung (14) größer ist als die Biegesteifigkeit des Arms (16).

2. Verschraubter Anschluss (10) nach Anspruch 1, wobei der Halter (20) eine andere Leitung (50) ist.

3. Verschraubter Anschluss (10) nach einem der Ansprüche 1 oder 2, wobei die Dichtung (14) aus Kupfer besteht.

4. Verschraubter Anschluss (10) nach einem der Ansprüche 1 bis 3, wobei zwischen der Leitung (50) einerseits und der Dichtung (14) und dem Verbindungsstück (12) andererseits ein Dichtungsraum (18) vorgesehen ist, wobei der Dichtungsraum (18) zum Auffangen von aus der Leitung (50) ausgetretenem Fluid ausgebildet ist.

5. Verschraubter Anschluss (10) nach einem der Ansprüche 1 bis 4, wobei das Verbindungsstück (12) und die Dichtung (14) ringförmig sind.

6. Verschraubter Anschluss (10) nach einem der Ansprüche 1 bis 5, wobei das Verbindungsstück (12) einen ringförmigen Dichtungsvorsprung (13) aufweist, der sich ab einer Fläche des Verbindungsstücks (12) erstreckt, die ausgelegt ist, um mit der Dichtung (14) in Kontakt zu kommen, und ausgelegt ist, um beim Festziehen des Verbindungsstücks (12) auf der Dichtung (14) in die Dichtung (14) einzudringen.

7. Raketentriebwerk (80), das einen verschraubten Anschluss (10) nach einem der Ansprüche 1 bis 6 umfasst.

8. Raketentriebwerk (80) nach Anspruch 7, wobei der verschraubte Anschluss (10) in einer Kryogenleitung angeordnet ist.

9. Raumfahrzeug (500), das ein Raketentriebwerk (80) nach Anspruch 8 umfasst.

## Claims

1. A screw connector (10) for connecting a fluid pipe (50) to a support (20), the screw connector comprising the pipe (50), a seal (14) intended to be secured to the support (20), a joining part (12) configured to cooperate with the seal (14) by clamping, and an arm (16) extending around the pipe (50) outside the pipe (50) and connecting the pipe (50) to the joining part (12), wherein
the joining part (12) has a greater stiffness than the arm (16) and the seal (14), that is, the flexural stiffness of the arm (16) is less than the compressive stiffness of the joining part (12), and
the screw connector (10) comprises a first threaded part (11) and the support (20) comprises a second threaded part (21), the first threaded part (11) and the second threaded part (21) being configured to cooperate to assemble the connector to the support by screwing, **characterized in that**:
the seal (14) has a stiffness greater than that of the arm (16), that is, the compressive stiffness of the seal (14) is greater than the flexural stiffness of the arm (16).

2. The screw connector (10) according to claim 1, wherein the support (20) is another pipe (50).

3. The screw connector (10) according to one of claims 1 or 2, wherein the seal (14) is made of copper.

4. The screw connector (10) according to one of claims 1 to 3, wherein a sealing volume (18) is provided between the pipe (50) on the one hand and the seal (14) and the joining part (12) on the other hand, the sealing volume (18) being configured to collect fluid having leaked from the pipe (50).

5. The screw connector (10) according to one of claims 1 to 4, wherein the joining part (12) and the seal (14) are annular.

6. The screw connector (10) according to one of claims 1 to 5, wherein the joining part (12) comprises an annular sealing projection (13) extending from a face of the joining part (12) configured to enter into contact with the seal (14), and configured to penetrate the seal (14) when tightening the joining part (12) on the seal (14).

7. A rocket engine (80) comprising a screw connector (10) according to any one of claims 1 to 6.

8. The rocket engine (80) according to claim 7, wherein the screw connector (10) is disposed in a cryogenic line.

9. A spacecraft (500) comprising a rocket engine (80) according to claim 8.
